# EUROPEAN PATENT APPLICATION

(11) **EP 0 600 565 A1**
(43) Date of publication of application: **08.06.1994**
(21) Application number: 93203366.5
(22) Date of filing: 01.12.1993
(51) Int. Cl.: A22C 9/00, A23B 4/26, A23B 4/32

(54) **Automated machine for processing meat products**

(30) Priority: 04.12.1992 IT MI922783
(71) Applicant: Possenti, Giovan Battista, I-22053 Lecco (Como) (IT)
(72) Inventor: Possenti, Giovan Battista, I-22053 Lecco (Como) (IT)
(74) Representative: Faraggiana, Vittorio, Dr. Ing.

(57) **Abstract**

A machine for processing meat products comprises a container (12) for receiving the meat product, said container (12) being connected to movement means (15, 16, 45) for moving it so as to cause massaging of the product contained therein. Also connected to the container (12), through controlled delivery means (29), is a plurality of vessels (28) containing the treatment additives, a control device (18) sending controlled activation signals to the delivery means (29) for operating it at predetermined instants of the working cycle of the machine being also provided. Advantageously, the container (12) is maintained under vacuum conditions so that the additives are sucked into the container on opening of the delivery means (29).

## Description

In the technique of processing meat products, such as for example ham, smoked ham, bacon, some types of sausages, and the like, the requirement of submitting meat to treatments involving salting and introduction of spices and additives in general is known.

These treatments are usually obtained by appropriate machines provided with a movable (generally rotating) container in which meat is introduced together with the related additional products in the form of grains or powders. The container movement prolonged over relatively long periods (in the order of days) carries out a massaging movement on the meat which thus absorbs the different additive substances. The massaging operation is repeated several times, being alternated with pauses for the introduction of the new additives and in order to allow the meat to stand. Presently, the introduction of the additives takes place by manually scattering said additives on the meat, which operation not only requires that the machine be stopped, but also does not, allow a completely uniform distribution to be achieved. In addition, due to the manual introduction of the additives, the machine is to be stopped at each introduction and therefore this operation cannot be carried out very often. In an attempt to make the distribution of the additive substances on the meat as uniform as possible, the overall treatment is prolonged over long periods of time.

It is an object of the present invention to obviate the above drawbacks by providing a machine for processing meat with the introduction of additive substances in a more efficient and quicker manner.

In view of the above object, in accordance with the invention a machine for processing meat products has been devised which comprises a container for the meat product, said container being connected to movement means for moving the container itself so as to cause massaging of the product contained therein, a plurality of vessels containing treatment additives being also connected to said container through controlled delivery means, and a control device sending controlled activation signals to the delivery means for operating it at predetermined instants of the machine working cycle being also provided. For better explaining the innovatory principles of the present invention and the advantages it offers over the known art, a possible embodiment of the invention applying said innovatory principles will be given hereinafter by way of non-limiting example with the aid of the accompanying drawings, in which:
- Fig. 1 is a diagrammatic, part sectional view of an admission section for introduction of the additives into the machine of the invention;
- Fig. 2 is a rear view of a detail of the section shown in Fig. 1;
- fig. 3 is a top view of the detail shown in Fig. 2;
- Fig. 4 is a diagrammatic view in side elevation of the machine of the invention.

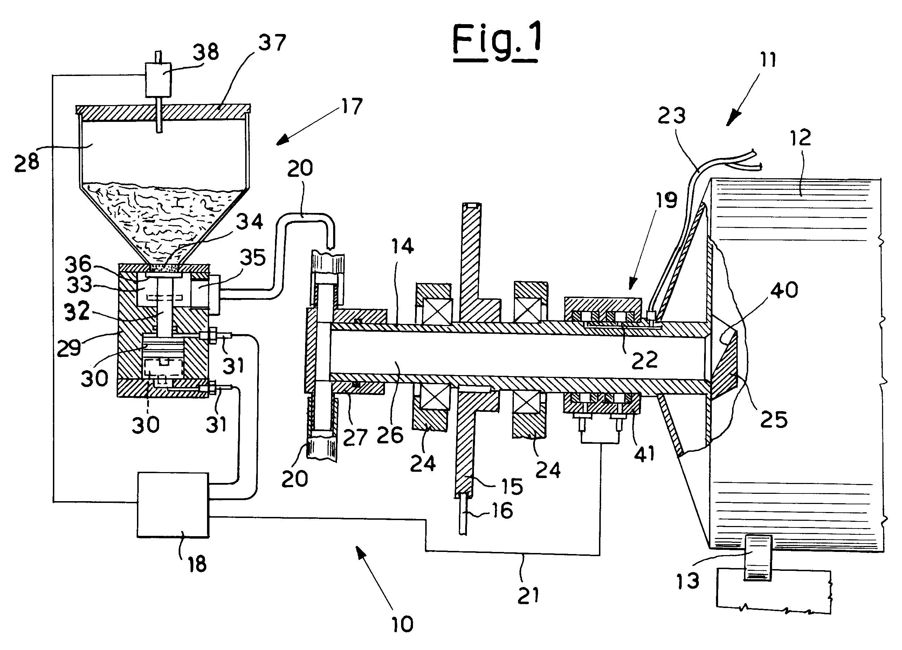

Referring to the drawings, diagrammatically shown in Fig. 1 is an additive admitting section 10 of an innovatory machine for processing meat products according to the invention. The machine, generally denoted by 11, comprises a movable container 12 for carrying out massaging of the meat introduced thereinto. The container 12 may for example be a cylinder with a substantially horizontal axis, supported at the lower part thereof by rolling rollers 13. An axial shaft 14 carries a pulley 15 keyed thereon for rotation of the container upon command of a power driven belt 16. The shaft is supported by bearings 24.

In an innovatory manner, connected to the container 12 is a plurality of devices 17 for the automatic delivery of treatment additives, in the form of grains or powders, such as salt, spices and all other substances that may be necessary for meat processing.

For simplicity purposes, only one delivery device is shown in the figures. It is however clear that these devices or vessels may be of any number depending on the number of additives to be separately introduced into the container. The activation of each delivery device is controlled, as better specified in the following, by a timing circuit 16, for example in the form of a suitably programmed known microprocessor device.

Advantageously, the axial shaft 14 has a hollow shape so as to form a duct 26 and the delivery or dispensing devices 17 have the additive-delivering side connected thereto by means of a rotary joint 27 so as to enable the container to rotate freely. In particular, ducts 20, each connected to the outlet of the delivery devices 17, open into the rotary joint.

Advantageously, a baffle means 25 designed to spread the additive products within the container is provided on the inlet opening of the duct 26 in the container As viewed from Fig. 1, a dispensing device 17 comprises an upper portion in the form of a vessel 28 for storing the additive to be delivered and a lower valve portion or delivery means 29. The valve portion comprises a controlled shutoff element, for example embodied by a double-acting piston 30 driven in motion by means of two compressed air sources 31 controlled by a control device 18. The piston has a rod 32 which is inserted in a chamber 33 connected to the upper vessel 28 by means of an inlet passage 30 and to a duct 20 by means of an outlet passage 35. The rod 32 has a plug 36 on its free end for the controlled closing of the inlet passage 34.

The vessel 28 is sealingly closed by means of a cover 37 and at the upper part thereof is in communication with the surrounding atmosphere through a valve 38 controlled by the device 18.

The container 12 may also be provided with a valve 41 operated by the device 18 for evacuating liquids from the container.

Provision is also made for a rotating pipe fitting 19 designed to operate the valve 41 and receiving pneumatic control means 21 from the device 18. The pipe fitting 19 is connected to passages 22 in the shaft which are connected to the valve 41 through ducts 23.

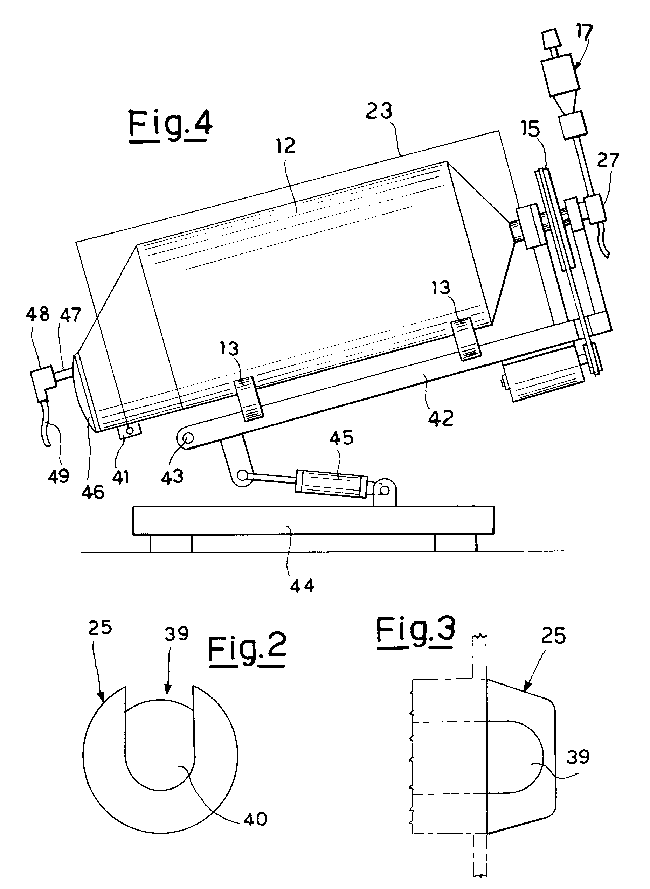

Advantageously, the container is connected to a vacuum source, such as a vacuum pump, controlled by the device 18 for keeping the container (which is tightly sealed) to a pressure lower than the atmospheric pressure. As shown in Fig. 4, the connection of the vacuum source can be made for example through a hollow shaft 47 opening into the container and supporting a rotary joint 48 similar to the rotary joint 27 and connected to the vacuum source 49.

In use, the meat to be treated is put into the container 12 and the additives into the vessels 28. As soon as the machine is started, the container 12 begins rotating slowly while the control device 18 starts the vacuum source in order to create a vacuum within the container. Each time an additive batch is to be introduced into the container 12 the device 18 operates the corresponding delivery device for moving the piston 30 from the closing position to the opening position (shown in chain line in Fig. 1). Simultaneously, the valve 38 for communication with the surrounding atmosphere is also operated. In this manner, due to the vacuum existing in the container 12, the additive is sucked from the vessel and spread into the container 12 by means of the baffle means 25.

After elapsing of the predetermined period of time for drawing in the desired amount of additive, the device 18 brings the piston back to its raised closing position and the valve 38 is closed. The valve 38 ensures that following an imperfect sealing of the plug 36, caused by the interposition of grains of additive for example, a continous passage of air and additive towards the meat container does not occur. When the additive delivery is stopped, the control device 18 operates the vacuum source so as to bring the vacuum in the container back again to the predetermined values. The shape of a baffle means as shown in Figs. 1, 2 and 3 has been deemed useful for achieving a uniform distribution of the additive. As can be seen from said figures, the baffle 25 has a substantially radial opening 39 and an inner chute 40 connecting the duct of the hollow shaft 14 to the opening 39.

The duration of the different meat processing steps within the container can be programmed in the device 18 depending on requirements and the type of meat to be processed. For example, an operating cycle of the machine may provide one step of a duration of less than three hours (one or two hours, for example) during which the introduction of salt occurs.

Subsequently the container is continuously driven in motion for a period of 4 to 10 hours in order to carry out the massaging step. At the end of the massaging step, the produced liquids are evacuated through the valve 41. This evacuating operation can be prolonged over one hour. During the last hour, in the last 15-20 minutes for example, the dispensing devices 17 are operated as above described for carrying out the introducion of spices. Thus the complete cycle has a duration of 6 to 12 hours, that is a period much shorter than the days necessary with the machines of the known art. In addition, the machine operation takes place completely automatically over the whole period of time, without any human intervention being required. Shortening of the working time is mainly due to the possibility of introducing the additive products such as salt and spices by uniformly distributing them in a lapse of time.

A possible embodiment of the machine in which the container is of a tiltable type, as described in the co-pending Italian Patent Applicant in the name of the same applicant, is shown in Fig. 4. As shown in said figure, the container, disposed according to a substantially horizontal axis, is rotatably supported by a frame 42 pivotally mounted, close to a discharge door 46, to a base 44 by means of an axis 43 transverse to the rotation axis of the container. An actuator 45 is disposed between the base and supporting frame for mutual movement of said elements. In this manner not only the container can rotate, but it can also carry out a rocking movement through ±20°, in particular ±15° relative to its horizontal axis. As a result, a better distribution of the additive products is achieved and a more efficient massaging function. In addition, the liquid and meat evacuation is facilitated because the container can be completely tilted as shown in Fig. 4. In conclusion, this solution brings about a reduction in the processing time. At this point it is apparent that the intended objects are achieved.

Obviously, the above description of an embodiment applying the innovatory principles of the present invention is given for purposes of illustration only and therefore must not be considered as a limitation of the scope of the invention as herein claimed.

For example, the structure for connection with the inside of the container may be different from the hollow shaft as shown, and also different may be the movement means for rotating and oscillating the container.

It is also obvious that the above described working cycle can be varied depending on requirements. For example, the liquid evacuation can take place at other times rather than during the last processing step.

The shutoff element can be also made in the form of a slide valve instead of as an axial plug.

While the admission of additives has been described as being executed to advantage by means of a vacuum created in the container (the vacuum being advantageous for increasing the meat processing speed), the additives can be also sent to the container by means of pressure, said pressure being for example imparted through the valve 38. Thus, as a general rule, transferring takes place by establishing a pressure difference between the container and vessel, so as to obtain a transporting air stream.

## Claims

1. A machine for processing meat products comprising a container (12) for the meat product, said container (12) being connected to movement means (15, 16, 45) for moving the container itself so as to cause massaging of the product contained therein, a plurality of vessels (28) containing treatment additives being also connected to said container (12) through controlled delivery means (29), and a control device (18) sending controlled activation signals to the delivery means (29) for operating it at predetermined instants of the machine working cycle being also provided.

2. A machine according to claim 1, characterized in that a means (38, 27) for creating a pressure difference between the container (12) and vessel (28) is provided, so that, on activation of the delivery means, the additive products are conveyed to the container by means of an air stream.

3. A machine according to claim 1, characterized in that the container (12) is connected to a vacuum source for maintaining it at a pressure lower than the atmospheric pressure.

4. A machine according to claim 3, characterized in that each vessel (28) is tightly sealed and communicates with the surrounding atmosphere through a valve (38) operated by the control device (18).

5. A machine according to claim 1, characterized in that the controlled delivery means (29) comprises a shutoff element (36) disposed for drivingly closing a passage (34) between the vessel (28) and container (12).

6. A machine according to claim 5, characterized in that the shutoff means comprises a plug (36) for closing the passage (34) which is located on the lower portion of vessel (28) and disposed on a rod (32) of an actuating piston (30).

7. A machine according to claim 6, characterized in that the piston (30) is of the double-acting type, being driven in motion by two compressed air sources (31) operated by the control device (18).

8. A machine according to claim 1, characterized in that the movement means supports the container (12) at least for the axial rotation of same.

9. A machine according to claim 8, characterized in that the container (12) at one of its ends has an axially projecting shaft (14) supporting a rotary joint (27) for connection between a passage (26) provided at the inside of the shaft and opening into the container (12) and the outlet of the controlled delivery means (29).

10. A machine according to claim 3, characterized in that the container (12) has at one of its ends a hollow shaft (47) opening into the container and connected, through a rotary joint (48), to the vacuum source (49).

11. A machine according to claim 9, characterized in that the shaft (14) carries a belt pulley for a power-driven rotation of the container.

12. A machine according to claim 8, characterized in that the container (12) is of cylindrical form and rests on axial-rotation rollers (13).

13. A machine according to claim 8, characterized in that the movement means supports the container (12) also in such a manner that it can carry out a rocking movement about an axis (43) transverse to the axial rotation axis.

14. A machine according to claim 13, characterized in that the container (12) disposed according to a substantially horizontal axis, is rotatably supported by a frame (42) pivotally mounted, close to one end of the container, to a base (44) by means of said transverse axis (43), an actuator (45) for the rocking movement of the frame being disposed between the base and supporting frame.

15. A machine according to claim 13, characterized in that the rocking movement has a maximum inclination of ±20°, in particular ±15°, relative to the horizontal.

16. A machine according to claim 4, characterized in that the valve (38) receives an opening signal and a closing signal substantially simultaneously with the controlled delivery means (29), so that suction of the additive products from the vessel (28) to the container (12) is enabled by the vacuum created in the container.

17. A machine according to claim 1, characterized in that the container (12) comprises a liquid-evacuating valve (41) operated by the control device (18).

18. A machine according to claim 9, characterized in that the inner passage (26) opens into the container (12) at a baffle means (25) comprising an outlet opening (39) disposed substantially radially of the container axis.

19. A machine according to claim 18, characterized in that the baffle means (25) has an inner wall (40) inclined to the axis of the container (12) and disposed between the inner passage and radial outlet opening.

20. A machine according to claim 1, characterized in that the predetermined instants are distributed over the machine operating cycle.

21. A machine according to claim 20, characterized in that the predetermined instants are distributed over the first three hours and last hour of an operating cycle of the machine, in particular over the first two hours and last 20 minutes.

22. A machine according to claims 9 and 17, characterized in that the shaft (14) supports another rotary joint or pipe fitting (19) for the pneumatic operating connection of the evacuation valve (41) to the device (18).
